# EUROPEAN PATENT SPECIFICATION

(11) **EP 0 743 817 B1**
(45) Date of publication and mention of the grant of the patent: **14.10.1998**
(21) Application number: 95909701.5
(22) Date of filing: 10.02.1995
(51) Int. Cl.: A01G 3/053

(54) **CUTTING DEVICE FOR GARDENING AND HORTICULTURE**
SCHNEIDEVORRICHTUNG FÜR DEN GARTENBAU
DISPOSITIF DE TAILLE UTILISE EN JARDINAGE ET EN HORTICULTURE

(30) Priority: 11.02.1994 IT VI940021
(43) Date of publication of application: 27.11.1996
(73) Proprietor: VALEX S.P.A., 36015 Schio (Vicenza) (IT)
(72) Inventor: ANZOLIN, Bruno, I-36030 San Vito di Leguzzano (IT)
(74) Representative: Forattini, Amelia
(86) International application number: EP9500477
(87) International publication number: WO9521521

(56) References cited:
- EP-A- 0 160 420
- EP-A- 0 465 117
- EP-A- 0 492 746
- EP-A- 0 635 200
- DE-A- 4 224 665
- FR-A- 2 122 473
- FR-A- 2 409 690
- GB-A- 2 189 179

## Description

The present invention relates to a cutting device for gardening and horticulture which can be used for example for cutting hedges, bushes, shrubs, and small branches, and to a method for producing the device.

Devices of this type are normally but not exclusively coupled to a portable casing that contains a motor for actuating the cutting tools, see for example the French application FR-A-2 409 690 and the European application EP-A-0 465 117.

The invention relates in particular to devices that include: two identical and oppositely arranged elongated blades, in which each blade has a longitudinal median axis and asymmetrical lateral cutting regions; a guiding means for keeping the blades in mutual contact and partially face to face, so that they can slide longitudinally; and an actuation means to move the blades with a reciprocating motion in opposite directions on the mutual contact plane so as to make their lateral cutting edges interact.

Examples of embodiment of these devices are described, for example, in German application DE-A-4 224 665 and in French application FR-A-2 122 473.

These known devices have several advantages but also some drawbacks.

A first drawback is the rather low efficiency, due to the fact the the cutting regions are constituted by approximately trapezoidal transverse teeth which have sharp edges that cover only part of the inclined sides.

Another drawback is constituted by the fact that the shape and orientation of the cutting edges do not allow cutting from any position hut only at certain relative angles.

A further drawback is constituted by the need to frequently sharpen the blades due to the limited extent of the cutting edges.

From EP-A-0 492 746 a hedge trimmer having all the features mentioned in the preamble of claim 1 is known. This known device has the disadvantages that the cutting blades are made from thin plate by bending process and therefore have a very low mechanical strength. Moreover, the fan-shaped projections provided on the series of teeth on one side of each blade are not blended with the profile of the adjacent recesses and have a longitudinal dimension which is larger than the minimum interspace between the teeth thus rendering more difficult for the branches to enter the recesses.

The aim of the present invention is to overcome or at least reduce the drawbacks described above by providing a cutting device for gardening and horticulture that is highly effective and has a low cost.

Another object is to provide blades with extensive cutting edges and having a shape adapted for cutting from different positions with substantially constant efficiency.

This aim, these objects, and others which will become apparent hereinafter are achieved by a device of the type defined in the appended claim 1.

This solution allows to increase the extension of the cutting edge and accordingly to increase the efficiency of the device as a whole with respect to the prior art.

Furthermore, by virtue of the circular arc-like shape it is possible to cut from several relative positions without significantly reducing the effectiveness of the device.

Further characteristics and advantages will become apparent from the following detailed description of a preferred but not exclusive embodiment of the device and of the method according to the invention, illustrated only by way of non-limitative example in the accompanying drawings, wherein:

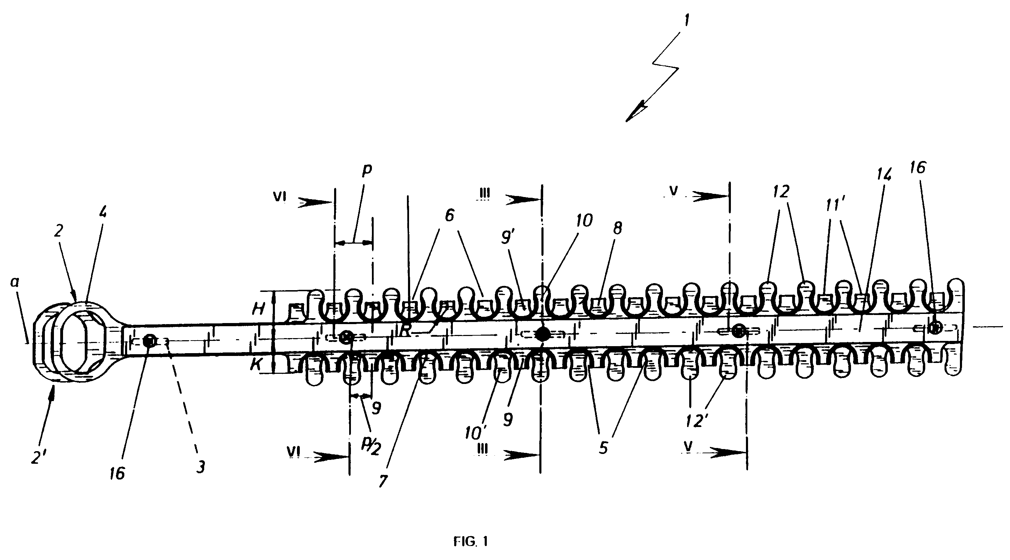

Figure 1 is a top plan view of a device according to the invention;
Figure 2 is an exploded perspective view of the device of Figure 1, wherein some parts are not illustrated;
Figure 3 is a sectional view taken along the plane III-III of Figure 1;

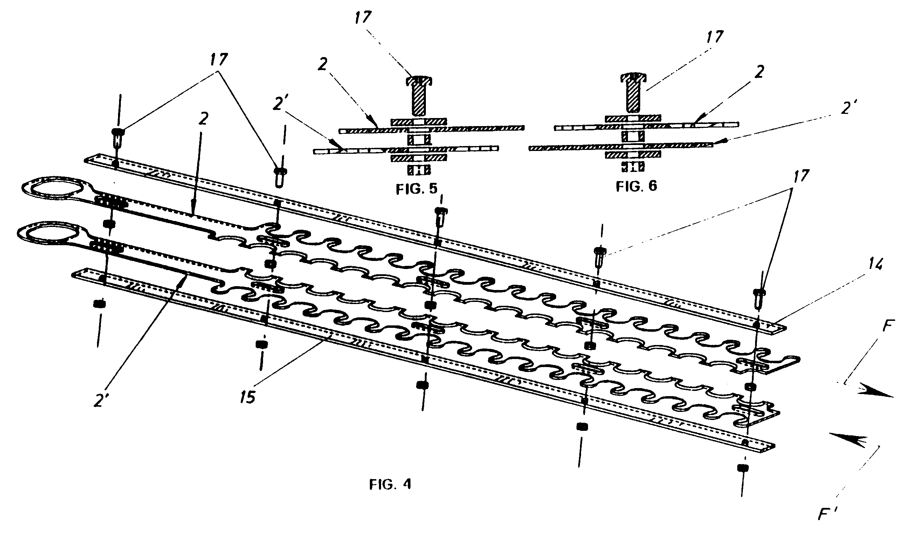

Figure 4 is a perspective exploded view of the complete device of Figure 1;
Figures 5 and 6 are sectional views respectively taken along the planes V-V and VI-VI of Figure 1.

With reference to the above figures, the cutting device according to the invention, generally designated by the reference numeral 1, comprises a set of two perfectly identical interchangeable blades 2, 2' which are coupled and partially superimposed.

Since the blades 2, 2' are identical, only the first one will be described hereinafter for the sake of brevity.

The blade 2 is constituted by an elongated body, which is obtained for example from a flat metal plate of constant thickness, and has an approximately central longitudinal axis a which has an end portion 3 of constant width.

The portion 3 has an enlarged head 4 with a central slot for coupling to a reciprocating actuation unit, for example of the eccentric type, which is not shown in the drawings and is of a per se known type.

In the remaining part of the elongated body, the blade has, along its opposite sides, two lateral cutting regions which are constituted by two series of recesses which are designated by the reference numerals 5 and 6 respectively and have a constant longitudinal pitch p.

According to the invention, the recesses have, in plan view, substantially the shape of a circular arc with a radius R and the concavity directed towards the median axis a. Each recess has a sharp edge 7, 8 that runs along the entire extension of the arc.

Preferably, the angular extent of the arc is at least 180°, so as to surround on all sides a body to be cut.

The recesses 5 arranged on one side of the plate-like body are offset by p/2 longitudinally with respect to the recesses 6 formed on the opposite side.

Accordingly, the recesses 5 and 6 form, in the lateral edges of the body, the bottoms of two series of teeth 9 and 10 which have dull crests 11 and 12. The crests 11 are substantially straight and aligned, and the crests 12 protrude outward, approximately in a mushroom-like shape, with a substantially semicircular profile.

The maximum distance H of the semicircular crests 12 from the central axis a is slightly greater than the distance K of the straight crests 11 from the same axis.

Two or more elongated holes 13 are formed along the axis a and are meant for coupling to the other blade 2'.

In particular, the blade 2', to which the same reference numerals have been applied, with the addition of primes, to reference the corresponding parts of the blade 2, is rested on the twin blade 2 after rotating it through 180° about its own longitudinal axis a', so as to arrange the crests 11' opposite the crests 12 and the crests 12' opposite the crests 11. In this manner, the sides of the crests 12, 12' that protrude inward can apply, during operation, an action that retains and pushes the material to be cut towards the cutting edges 8, 8' of the opposite recesses 6', 6, ensuring high cutting efficiency.

A guiding means is provided to retain the blades 2, 2' in a mutually facing position and in mutual contact with minimal clearance, so that the blades can slide and move in a reciprocating manner in opposite directions.

This guiding means, which is of a per se known type, can be constituted by a pair of strips 14 and 15 made of rigid material which are arranged above and below the facing blades 2, 2' and are mutually retained in a parallel arrangement by pins 16 which are constituted for example by screws 17 that pass through the elongated holes 13, 13' formed in the blades 2, 2', with the interposition of bushes 18 made of antifriction material.

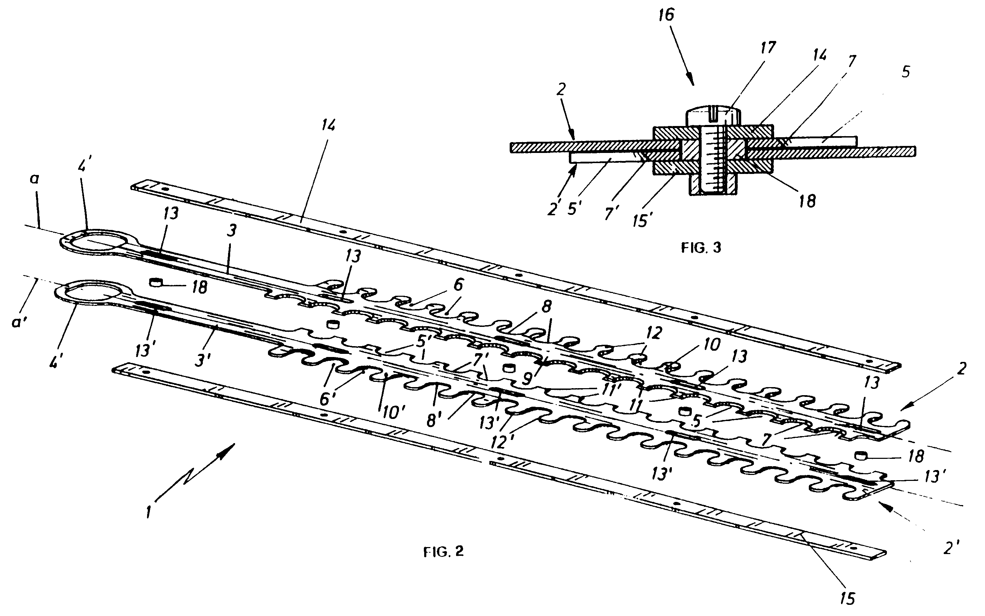

Once the blades 2, 2' have been assembled as shown in the exploded view of Figure 2, the slots 4, 4' are coupled to eccentrics or similar parts that move the blades in a reciprocating manner in opposite directions, as shown schematically by the arrows F, F', so as to cut the objects which become interposed between the lateral recesses.

In order to produce a blade 2 it is necessary to form the elongated body by blanking, with a preformed blanking die, a flat metal plate of substantially uniform thickness. During blanking it is possible to form both the lateral recesses 5 and 6 and the slotted holes 13 arranged along the longitudinal axis a.

The sharpening of the edges of the recesses, which is meant to form the cutting edges 7 and 8, is provided by chip-forming machining, without using polluting abrasives or grinding wheels.

In particular, mechanical machining can be performed with angular or frustum-shaped milling cutters arranged coaxially in front of each recess.

Furthermore, each blade can be sharpened by simultaneously machining multiple recesses, for example all the recesses of a single side, by virtue of multiple rotating milling cutters mounted on parallel axes, with considerable time saving and economy in equipment.

The chips produced by milling and the coolant liquids can be easily collected and recycled, with a considerable economic and environmental benefit.

In a variation of the above described method, the inclined cutting edges may be formed by using adapted separate blanking dies, instead of rotating milling cutters. The dies act during the blanking of the contour of the blade at a relative angle with respect to the plane of arrangement of the blade.

The cost of sharpening, which in blades of the prior art could be approximately 50% of the total production cost, is reduced dramatically with this method, for example to approximately 10%, with an obvious effect on the final cost of the blade and therefore of the entire device.

## Claims

1. Cutting device for gardening and horticulture, comprising:
- two blades (2, 2') which are identical in shape and are arranged facing each other, each blade consisting of an elongate plate-like body with a longitudinal axis (a, a') and two asymmetrical lateral cutting regions;
- a guiding means (14, 15, 16) for keeping said blades (2, 2') partially superimposed and with their lower surfaces in mutual contact so that they can slide longitudinally;
- a connection means (4) for coupling said blades (2, 2') to an external actuation means that is suitable to make said blades move in a reciprocating manner in opposite directions (F, F') on a mutual contact plane;
- the cutting region of each blade having a profile formed by a series of equidistant recesses (5, 6; 5', 6') whose plane shape is essentially a circular arc with the concavity directed towards the longitudinal axis (a, a'), each recess (5, 6; 5', 6') having a sharp edge (7, 8; 7', 8') covering the entire extension of said arc, said recesses forming, along said lateral cutting regions, two series of teeth, the crest (12, 12') of the series of teeth arranged on the one side of the body having protrusions which are approximately like a mushroom with a semicircular profile;
characterized in that said blades (2, 2') are flat metal plates of constant thickness with upper and lower surfaces which are planar and parallel to each other, and in that the crests (11, 11'; 12, 12') of said two series of teeth are dull, said mushroom-like protrusions of the one series of teeth having the same thickness as the rest of the blade, the other series of teeth arranged on the other one side of the body having straight crests (11, 11') which are parallel to said longitudinal axis, the semicircular profile (12, 12') of said mushroom-like protrusion of the one series of teeth being blended with the adjacent recesses (6, 6') of the same series, the straight crests (11, 11') of the other series of teeth having a longitudinal dimension which is smaller than the minimum interspace between the adjacent teeth of the same series to thereby allow cutting from different position and with substantially constant efficiency.

2. Device according to claim 1, characterized in that the angular extension of said arc is at least 180°.

3. Device according to claim 2, characterized in that the recesses (5, 6; 5', 6') arranged on the opposite lateral regions of said plate-like body are mutually staggered by half a pitch in a longitudinal direction.

4. Device according to claim 1, characterized in that the maximum distance of said semicircular protrusions from the longitudinal median axis is slightly greater than the distance of the straight crests from the same axis.

5. Device according to claim 1, characterized in that each blade has at least one pair of elongated holes along said axis.

6. Device according to claim 5, characterized in that said guiding means comprises two rigid strips (6, 7) which act on the upper faces of said facing blades and are mutually retained by pins that pass through said elongated holes of said blades and have a smaller diameter than said holes.

## Patentansprüche

1. Schneidevorrichtung für die Gartenpflege und den Gartenbau, mit
- zwei Schneidemessern (2, 2'), welche in der Form identisch und einander gegenüberliegend angeordnet sind, wobei jedes Schneidemesser aus einem länglichen plattenartigen Körper mit einer Längsachse (a, a') und zwei asymmetrischen seitlichen Schneidebereichen besteht;
- Führungsvorrichtungen (14, 15, 16), um die Schneidemesser (2, 2') teilweise übereinandergelegt und mit ihren unteren Flächen im gegenseitigen Kontakt zu halten, so daß sie in Längsrichtung gleiten können;
- einer Verbindungsvorrichtung (4) zum Anschließen der Schneidemesser (2, 2') an eine äußere Antriebsvorrichtung, die dafür eingerichtet ist, die Schneidemesser in einer hin- und herpendelnden Weise in entgegengesetzte Richtungen (F, F') auf einer gegenseitigen Kontaktebene zu bewegen;
- dem Schneidebereich jedes Schneidemessers mit einem Profil, welches von einer Reihe von abstandsgetreuen Aussparungen (5, 6; 5', 6') gebildet ist, deren Flächenform im wesentlichen ein kreisförmiger Bogen ist, wobei die Bogenrundung zu der Längsachse (a, a') hin gerichtet ist, wobei jede Aussparung (5, 6; 5', 6') eine scharfe Kante (7, 8; 7', 8') hat, welche die gesamte Abmessung des Bogens einnimmt, wobei die Aussparungen entlang der seitlichen Schneidebereiche zwei Zahnreihen bilden, wobei das Kopfteil (12, 12') der auf der einen Seite des Körpers angeordneten Zahnreihe Vorsprünge aufweist, weiche näherungsweise wie ein Pilz mit einem halbkreisförmigen Profil geformt sind;
**dadurch gekennzeichnet,**
daß die Schneidemesser (2, 2') flache Metallplatten von konstanter Dicke mit oberen und unteren Flächen sind, welche eben und parallel zueinander sind, und daß die Kopfteile (11, 11'; 12, 12') der beiden Zahnreihen stumpf sind, wobei die pilzartigen Vorsprünge der einen Zahnreihe dieselbe Dicke haben wie der Rest des Schneidemessers, wobei die andere Zahnreihe, welche auf der anderen Seite des Körpers angeordnet ist, gerade Kopfteile (11, 11') aufweist, welche parallel zu der Längsachse sind, wobei das halbkreisförmige Profil (12, 12') der pilzartigen Vorsprünge der einen Zahnreihe in die anstoßenden Aussparungen (6, 6') derselben Reihe übergeht, wobei die geraden Kopfteile ( 11, 11') der anderen Zahnreihe eine längliche Ausdehnung haben, welche kleiner als der Mindestzwischenraum zwischen den anstoßenden Zähnen derselben Reihe ist, um dadurch ein Schneiden aus verschiedenen Positionen und mit im wesentlichen konstanter Wirksamkeit zu ermöglichen.

2. Vorrichtung gemäß Anspruch 1, dadurch gekennzeichnet daß die Winkelabmessung des Bogens zumindest 180° ist.

3. Vorrichtung gemäß Anspruch 2, dadurch gekennzeichnet daß die Aussparungen (5, 6; 5', 6'), welche auf den gegenüberliegenden seitlichen Bereichen des plattenartigen Körpers angeordnet sind, zueinander um einen halben Zwischenraum in einer Längsrichtung versetzt sind.

4. Vorrichtung gemäß Anspruch 1, dadurch gekennzeichnet daß der Maximalabstand der halbkreisförmigen Vorsprünge von der der Längsmittelachse etwas größer als der Abstand der geraden Oberteile von derselben Achse ist.

5. Vorrichtung gemäß Anspruch 1, dadurch gekennzeichnet, daß jedes Schneidemesser zumindest ein Paar länglicher Löcher entlang der Achse aufweist.

6. Vorrichtung gemäß Anspruch 5, dadurch gekennzeichnet, daß die Führungsvorrichtung zwei feste Streifen (6, 7) aufweist, welche auf den oberen Flächen der einander gegenüberliegenden Schneidemesser wirken und beiderseitig von Stiften, welche durch die länglichen Löcher der Schneidemesser laufen und einen kleineren Durchmesser als die Löcher haben, zurückgehalten werden.

## Revendications

1. Dispositif de coupe pour le jardinage et l'horticulture, comprenant :
- deux lames (2, 2') qui sont de forme identique et qui sont arrangées l'une en face de l'autre, chaque lame étant constituée d'un corps allongé semblable à une plaque avec un axe longitudinal (a, a') et deux régions de coupe latérales asymétriques ;
- un moyen de guidage (14, 15, 16) pour maintenir lesdites lames (2, 2') partiellement superposées et avec leurs faces inférieures en contact mutuel, de sorte qu'elles puissent coulisser longitudinalement ;
- un moyen de liaison (4) pour coupler lesdites lames (2, 2') à un moyen d'activation externe qui est approprié pour faire bouger lesdites lames selon un mouvement de va-et-vient, dans des directions opposées (F, F'), sur un plan de contact mutuel ;
- la région de coupe de chaque lame ayant un profil formé par une série d'évidements équidistants (5, 6 ; 5', 6') dont la forme plane est essentiellement un arc circulaire avec la concavité dirigée vers l'axe longitudinal (a, a'), chaque évidemment (5, 6 ; 5', 6') ayant un bord tranchant (7, 8 ; 7', 8') couvrant la totalité de l'étendue dudit arc, lesdits évidements formant, le long desdites régions de coupe latérales, deux séries de dents, les crêtes (12, 12') de la série de dents arrangées sur l'un des côtés du corps ayant des saillies qui sont approximativement semblables à un champignon avec un profil semi-circulaire ;
caractérisé en ce que lesdites lames (2, 2') sont des plaques de métal planes, d'épaisseur constante, avec des faces supérieures et inférieures qui sont planes et parallèles les unes aux autres et en ce que les crêtes (11, 11' ; 12, 12') desdites deux séries de dents sont émoussées, lesdites saillies semblables à un champignon de l'une des séries de dents ayant la même épaisseur que le reste de la lame, l'autre série de dents arrangées sur l'autre côté du corps ayant des crêtes rectilignes (11, 11') qui sont parallèles audit axe longitudinal, le profil semi-circulaire (12, 12') de ladite saillie semblable à un champignon de l'une des séries de dents se confondant avec les évidements voisins (6, 6') de la même série, les crêtes rectilignes (11, 11') de l'autre série de dents ayant une dimension longitudinale qui est plus petite que l'espacement minimal entre les dents voisines de la même série, pour permettre ainsi la coupe à partir de différentes positions et avec une efficacité sensiblement constante.

2. Dispositif selon la revendication 1, caractérisé en ce que l'étendue angulaire dudit arc est d'au moins 180°.

3. Dispositif selon la revendication 2, caractérisé en ce que les évidements (5, 6 ; 5', 6') arrangés sur les régions latérales opposées dudit corps semblable à une plaque sont mutuellement décalés d'un demi pas dans une direction longitudinale.

4. Dispositif selon la revendication 3, caractérisé en ce que la distance maximale desdites saillies semi-circulaires depuis l'axe médian longitudinal est légèrement supérieure à la distance des crêtes rectilignes depuis le même axe.

5. Dispositif selon la revendication 4, caractérisé en ce que chaque lame possède au moins une paire de trous allongés le long dudit axe.

6. Dispositif selon la revendication 5, caractérisé en ce que ledit moyens de guidage comprend deux bandes rigides (6, 7) qui agissent sur les faces supérieures desdites lames se faisant face et qui sont mutuellement retenues par des broches qui passent à travers lesdits trous allongés desdites lames et qui ont un diamètre plus petit que lesdits trous.
